# EUROPEAN PATENT SPECIFICATION

(11) **EP 4 197 693 B1**
(45) Date of publication and mention of the grant of the patent: **18.11.2026**
(21) Application number: 22212477.8
(22) Date of filing: 09.12.2022
(51) Int. Cl.: B23Q 5/04

(54) **OPERATING DEVICE WITH DIFFERENTIATED ROTATIONAL SPEED OUTPUTS AND MACHINE TOOL INCLUDING SUCH OPERATING DEVICE**
BEARBEITUNGSVORRICHTUNG MIT AUSGÄNGEN MIT UNTERSCHIEDLICHEN DREHGESCHWINDIGKEITEN SOWIE WERKZEUGMASCHINE MIT EINER SOLCHEN VORRICHTUNG
DISPOSITIF D'USINAGE AVEC DES SORTIES AVEC DES VITESSES DE ROTATION DIFFÉRENTES AINSI QUE MACHINE-OUTIL AVEC UN TEL DISPOSITIF

(30) Priority: 16.12.2021 IT 202100031547
(43) Date of publication of application: 21.06.2023
(73) Proprietor: SCM Group S.p.A., 47921 Rimini (RN) (IT)
(72) Inventor: GIGLIOTTI, Fabrizio, 47921 Rimini (RN) (IT); MECHINI, Fabrizio, 47921 Rimini (RN) (IT)
(74) Representative: Tiburzi, Andrea

(56) References cited:
- EP-A1- 0 458 728
- EP-A1- 3 040 145
- EP-A2- 1 270 145
- DE-B- 1 022 076

## Description

The present invention relates to an operating device with differentiated rotational speed outputs and machine tool including such operating device.

In the following, the description will be directed to a pass-through machine tool, i.e. a machine tool in which the workpiece to be machined is advanced along a given advancement direction during the execution of the machining operations, but it is clear that the same should not be considered limited to this particular type of machine tool, as it can also be extended to machine tools of other types.

The invention proposed here belongs to the field of operating devices, commonly called "operating aggregates" or "operating heads" in the specific jargon of the reference sector, intended to be used in machine tools for working pieces in wood, glass, plastic, metal or other materials, and to be coupled simultaneously to several machining tools.

Normally, these devices are equipped with a rotating input shaft, connected to the rotating shaft of an electro-spindle unit of the machine tool, and with a plurality of rotating output shafts, each connectable to a tool and connected to the input shaft so that the latter can simultaneously transmit a rotary motion to said output shafts and therefore to the relative tools mounted thereon.

EP 0 458 728 A1 discloses an operating device according to the preamble of claim 1.

However, the above-mentioned operating devices of the known type show various drawbacks and disadvantages linked mainly to the relative structural complexity, to the limited flexibility of use, and to the reduced polyvalence.

In light of the above, it is, therefore, an object of the present invention to provide an operating device with outlets at different rotation speeds, which allows for performing different types of machining without having to replace the tools mounted on these outlets.

Another object of the invention is to provide an operating device with outputs at different rotation speeds, which allows having an adequate cutting speed for each type of tool or for each type of machining to be carried out on the workpiece.

Another object of the invention is to provide an operating device with outputs at differentiated rotation speeds which is multipurpose.

A further object of the present invention is to provide an operating device with outputs at differentiated rotation speeds, which has a high degree of flexibility of use.

Another object of the invention is to provide an operating device with outputs at differentiated rotation speeds, which has a non-complex structure.

It is, therefore, specific object of the present invention an operative device for a machine tool which is suitable for machining at least one piece and provided with an electrospindle unit, said operative device comprising: an inlet shaft which is rotatable about a first rotation axis and connectable, in use, with said electrospindle unit such that said inlet shaft is rotated, in use, by said electrospindle unit about said first rotation axis; a first toothed wheel being conical and a second toothed wheel being conical, which are coaxially coupled to said inlet shaft; a first outlet shaft which is rotatable about a second rotation axis being substantially orthogonal to said first rotation axis of said inlet shaft, wherein said first outlet shaft is connectable, in use, with a first tool; a third toothed wheel, conical, which is coaxially coupled to said first outlet shaft and engaged with said first toothed wheel such that, in use, said first toothed wheel rotating about said first rotation axis of said inlet shaft causes said third toothed wheel to rotate about said second rotation axis of said first outlet shaft based on a first gear ratio of the rotary motion; a second outlet shaft which is rotatable about a third rotation axis being substantially orthogonal to said first rotation axis of said inlet shaft, wherein said second outlet shaft is connectable, in use, with a second tool, and wherein said third rotation axis of said second outlet shaft and said second rotation axis of said first outlet shaft are substantially coplanar; a fourth toothed wheel, conical, which is coaxially mounted to said second outlet shaft and engaged with said second toothed wheel such that, in use, said second toothed wheel rotating about said first rotation axis of said inlet shaft causes said fourth toothed wheel to rotate about said third rotation axis of said second outlet shaft based on a second gear ratio of the rotary motion which is different from said first gear ratio of the rotary motion; and a supporting and containing structure which supports said inlet shaft, said first outlet shaft and said second outlet shaft and contains said first toothed wheel, said second toothed wheel, said third toothed wheel and said fourth toothed wheel.

Advantageously according to the invention, said second outlet shaft may rotate faster than said first outlet shaft, based on said first gear ratio and second gear ratio.

Conveniently according to the invention, said third rotation axis of said second outlet shaft may be substantially at 90 degrees with respect to said second rotation axis of said first outlet shaft.

Further according to the invention, said first outlet shaft may comprise connection means to allow, in use, the connection with a first tool.

Still according to the invention, said second outlet shaft may comprise connection means to allow, in use, the connection with a second tool.

Preferably according to the invention, said operative device may comprise: a third outlet shaft which is rotatable about a fourth rotation axis being substantially orthogonal to said first rotation axis of said inlet shaft, wherein said third outlet shaft is connectable, in use, with a third tool, and wherein said rotation axis of said third outlet shaft, said third rotation axis of said second outlet shaft and said second rotation axis of said first outlet shaft are substantially coplanar; and a fifth toothed wheel, conical, which is coaxially mounted to said third outlet shaft and engaged to said second toothed wheel such that, in use, said second toothed wheel rotating about said first rotation axis of said inlet shaft causes said fifth toothed wheel to rotate about said rotation axis of said third outlet shaft based on a third gear ratio of the rotary motion which is equal to said second gear ratio of the rotary motion.

Advantageously according to the invention, said rotation axis of said third outlet shaft is substantially at 90 degrees with respect to said third rotation axis of said second outlet shaft.

Preferably according to the invention, said first gear ratio of the rotary motion may be approximately equal to 1:1.

Preferably according to the invention, said second gear ratio of the rotary motion may be approximately equal to 2:1.

It is also object of the present invention a machine tool for machining at least one workpiece, said machine tool comprising: an electrospindle unit; and an operative device according to any one of preceding claims, which is connected with said electrospindle unit such that said electrospindle unit is able to transmit a rotary motion to said operative device.

Preferably according to the invention, said operative device may be rotatable with respect to said electrospindle unit.

The present invention will be now described, for illustrative but not limitative purposes, according to its preferred embodiments, with particular reference to the figures of the enclosed drawings, wherein:

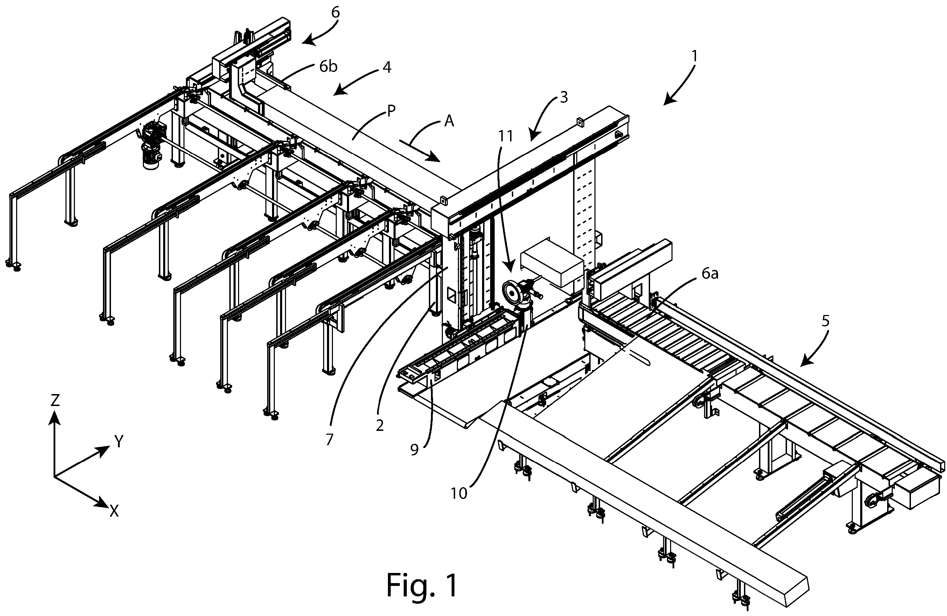

figure 1 is an overall axonometric view of a machine tool equipped with an operating device with outlets at different rotational speeds according to the present invention;

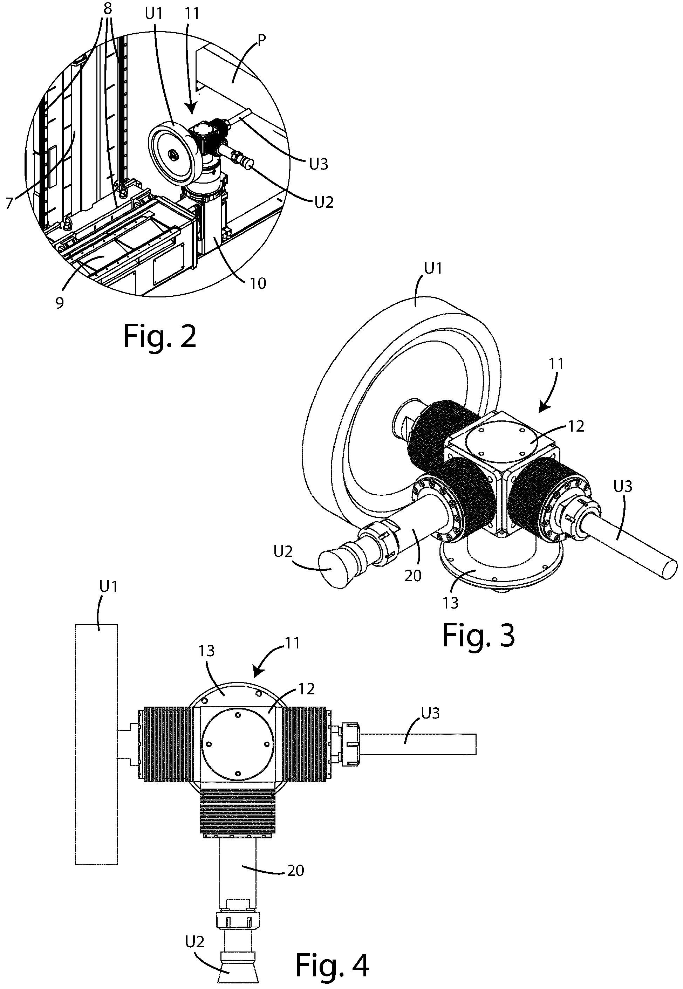

figure 2 is a detailed view extracted from figure 1;
figure 3 is an isometric view of the operating device with outputs at different rotational speeds shown in figures 1 and 2;
figure 4 is a top-plan view of the operating device with outputs at different rotational speeds illustrated in figure 3;
figure 5 is a side view of the operating device with outputs at different rotational speeds represented in figures 3 and 4;
figure 6 is a sectional view along the section line A-A indicated in figure 5;
figure 7 is a sectional view along the section line B-B indicated in figure 5;
figure 8 is a further side view of the operating device with outputs at different rotational speeds illustrated in figure 3;

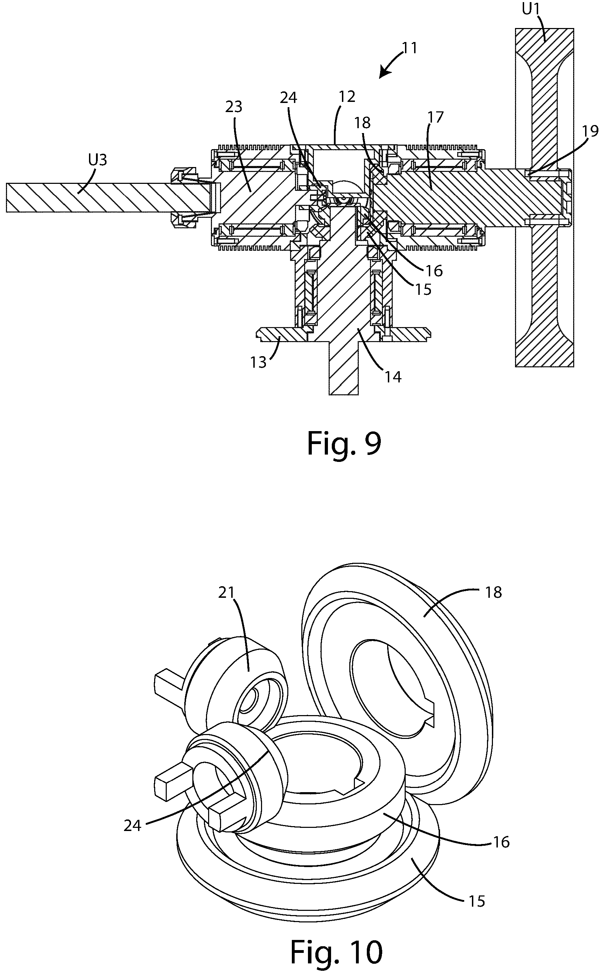

figure 9 is a sectional view along the section line C-C indicated in figure 8; and
figure 10 is an axonometric view showing, schematically, the kinematic mechanism with gears for the transformation of the rotary motion, with which the operating device with outputs at differentiated rotation speeds shown in figures 3-9 is equipped; for clarity of graphic representation, the teeth of the gear wheels shown therein are not shown in figure 10.

In the various figures, similar parts will be indicated with the same reference numbers.

With reference to the enclosed figures, 1 indicates a through-feed machine tool for working pieces made of wood, glass, plastic material, metal or other materials.

Essentially, this machine tool 1 comprises a frame 2, in which an operating station 3 is provided, arranged between an input area 4, assigned to receive a piece P to be machined, and an exit area 5, for picking up the piece P worked through the operating station 3.

In the machine tool 1 there is also provided with a movement system 6 for moving the piece P, according to an advancement direction A parallel to a first axis X, from the entry area 4 to the exit area 5 making it pass through the operating station 3.

This handling system 6 can comprise, for example, a roller conveyor 6a (namely, a series of mutually parallel and adjacent rollers) and a gripping and thrusting member 6b for grasping the piece P arranged on the roller conveyor 6a and pushing it according to the aforesaid advancement direction A.

The aforementioned operating station 3 comprises, on the other hand, a frame 7, on which it is mounted, by means of a guide system 8, a support member 9, movable along a second Y axis, orthogonal to the first X axis, and along a third Z axis orthogonal to the first X axis and the second Y axis.

An electrospindle unit 10 is mounted on one end of the support member 9 for rotation around a rotation axis parallel to the second Y axis.

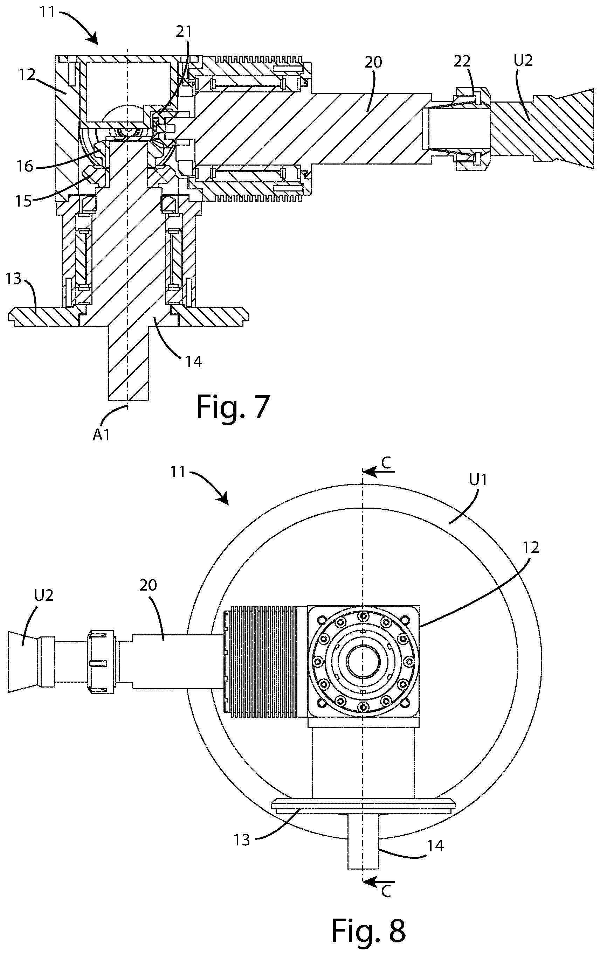

An operative device 11 according to the present invention is mounted at one end of the electro-spindle unit 10, so that this operative device 11 can rotate around the rotation axis A1 described below and indicated in figure 7, with respect to the electro-spindle unit 10, so as to be able to vary the orientation of the same operative device 11 on a plane orthogonal to the rotation axis A1.

In particular, this operative device 11 comprises an outer casing 12 provided, at one of its ends, with a flange 13 to allow it to be connected to the electro-spindle unit 10, this flange 13 being able to rotate around said axis A1 by rotary orientation members, made according to known methods, forming part of said electro-spindle unit 10.

Inside the outer casing 12 there is an end portion of an input shaft 14, i.e., a driving shaft, rotating around a relative rotation axis A1 and passing through the flange 13.

A first toothed wheel 15 and a second toothed wheel 16 are mounted coaxially and rigidly on the input shaft 14, having a diameter of the relative toothed part smaller than the diameter of the toothed part of the first toothed wheel 15.

Consequently, the first toothed wheel 15 and the second toothed wheel 16 are also coaxial with each other.

The operative device 11 also comprises a first output shaft 17, i.e. a first driven shaft, rotatable around a respective rotation axis A2, orthogonal to the rotation axis A1 of the input shaft 14.

At one end of the first output shaft 17, a third toothed wheel 18 is mounted coaxially and rigidly, meshed with the aforementioned first toothed wheel 15.

At the end of the first output shaft 17, opposite to that on which the third toothed wheel 18 is mounted, connection means 19 are provided to allow the connection with a first tool U1, such as, for example, a hogging.

The transmission ratio existing between the first toothed wheel 15 and the third toothed wheel 18 is 1:1, in order to have a high cutting torque in the first tool U1.

The operative device 11 also comprises a second output shaft 20, i.e. a second driven shaft, rotatable about a respective rotation axis A3, orthogonal to the rotation axis A1 of the input shaft 14, and coplanar to the rotation axis A2 of the first output shaft 17.

At one end of the second output shaft 20 is mounted, coaxially and rigidly, a fourth gear wheel 21, conical, meshed with the aforesaid second toothed wheel 16, and having an outer diameter of the relative toothed part smaller than the outer diameter of the toothed part of the third toothed wheel 18.

At the end of the second output shaft 20, opposite to that on which the fourth toothed wheel 21 is mounted, connection means 22 are provided, to allow connection with a second tool U2, such as for example a dovetail cutter.

The transmission ratio existing between the second toothed wheel 16 and the fourth toothed wheel 21 is 2:1, in order to have a higher rotation speed of the second tool U2, to obtain a better surface finish in the piece P being machined through the second tool U2.

In the operative device 11 there is also provided a third output shaft 23, i.e. a third driven shaft, rotatable around a respective rotation axis A4, orthogonal to the rotation axis A1 of the input shaft 14, and coplanar to the rotation axis A2 of the first output shaft 17 and to the rotation axis A3 of the second output shaft 20.

Therefore, the rotation axis A2 of the first output shaft 17, the rotation axis A3 of the second output shaft 20, and the rotation axis A4 of the third output shaft 23 lie in the same plane orthogonal to the rotation axis A1 of the input shaft 14.

At one end of the third output shaft 23 it is mounted, coaxially and rigidly, a fifth toothed wheel 24, conical, meshed with the aforesaid second toothed wheel 16, and having an outer diameter of the relative toothed part equal to the outer diameter of the toothed part of the fourth toothed wheel 21.

The aforesaid outer casing 12 supports the input shaft 14, the first output shaft 17, the second output shaft 20, and the third output shaft 23, and contains within it the first toothed wheel 15, the second toothed wheel 16, the third toothed wheel 18, the fourth toothed wheel 21 and the fifth toothed wheel 24.

At the end of the third output shaft 23, opposite to that on which the fifth toothed wheel 24 is mounted, connection means 25 are provided, to allow the connection with a third tool U3, such as, for example, an end mill.

The existing transmission ratio between the second toothed wheel 16 and the fifth toothed wheel 24 is 2:1, in order to have a higher rotation speed of the third tool U3, to obtain a better surface finish in the workpiece P through the third tool U3.

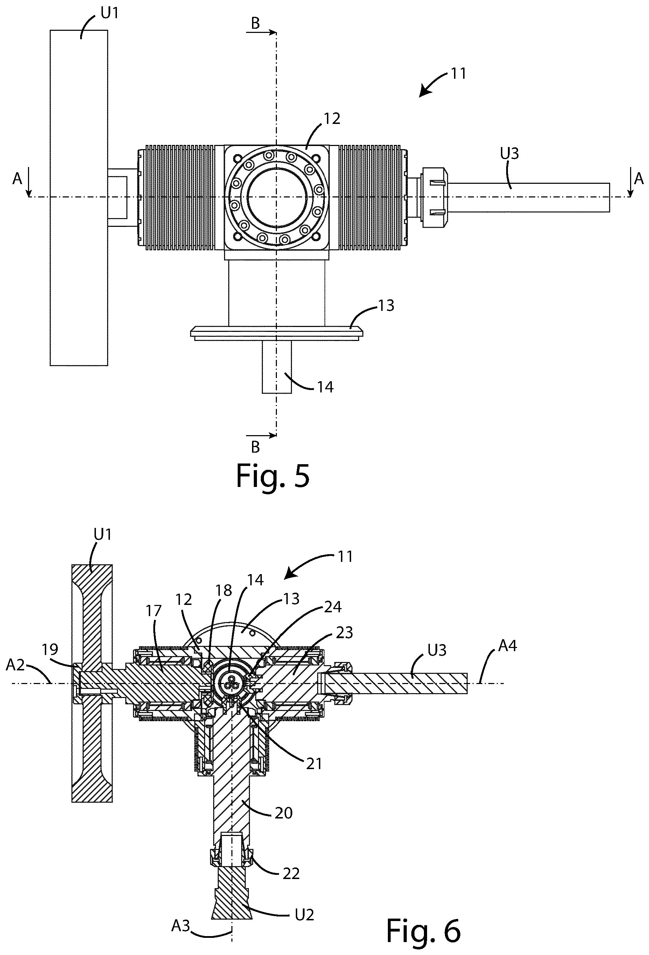

Preferably, the rotation axis A3 of the second output shaft 20 is perpendicular to the rotation axis A2 of the first output shaft 17, and the rotation axis A4 of the third output shaft 23 is perpendicular to said rotation axis A3 of the second output shaft 20, as shown in figure 6.

During the operation of the machine tool 1, the piece P is made to advance according to the advancement direction A, through the aforementioned movement system 6.

While the piece P is made to advance according to the advancement direction A, the electro-spindle unit 10 and/or the support member 9 move in such a way as to allow the first tool U1 and/or the second tool U2 and/or the third tool U3 to carry out on the piece P the workings envisaged by the working program in execution.

For the execution of certain machining operations on the piece P, the electro-spindle unit 10 and the support member 9 could remain stationary during the advancement of the piece P along the advancement direction A.

As can be inferred from the preceding description, the operating device according to the present invention makes it possible to have several tools at the same time and to make each of them work in the most appropriate manner or in the best manner on the basis of the specific work to be carried out on the piece, and the aesthetic results to be obtained on the piece itself.

## Claims

1. Operative device (11) for a machine tool (1) which is suitable for machining at least one piece (P) and provided with an electrospindle unit (10), said operative device (11) comprising:
an inlet shaft (14) which is rotatable about a first rotation axis (A1) and connectable, in use, with said electrospindle unit (10) such that said inlet shaft (14) is rotated, in use, by said electrospindle unit (10) about said first rotation axis (A1);
a first toothed wheel (15) being conical and a second toothed wheel (16) being conical, which are coaxially coupled to said inlet shaft (14);
a first outlet shaft (17) which is rotatable about a second rotation axis (A2) being substantially orthogonal to said first rotation axis (A1) of said inlet shaft (14), wherein said first outlet shaft (17) is connectable, in use, with a first tool (U1);
a third toothed wheel (18), conical, which is coaxially coupled to said first outlet shaft (17) and engaged with said first toothed wheel (15) such that, in use, said first toothed wheel (15) rotating about said first rotation axis (A1) of said inlet shaft (14) causes said third toothed wheel (18) to rotate about said second rotation axis (A2) of said first outlet shaft (17) based on a first gear ratio of the rotary motion;
a second outlet shaft (20) which is rotatable about a third rotation axis (A3) being substantially orthogonal to said first rotation axis (A1) of said inlet shaft (14), wherein said second outlet shaft (20) is connectable, in use, with a second tool (U2), and wherein said third rotation axis (A3) of said second outlet shaft (20) and said second rotation axis (A2) of said first outlet shaft (17) are substantially coplanar;
a fourth toothed wheel (21), conical, which is coaxially mounted to said second outlet shaft (20) and engaged with said second toothed wheel (16) such that, in use, said second toothed wheel (16) rotating about said first rotation axis (A1) of said inlet shaft (14) causes said fourth toothed wheel (21) to rotate about said third rotation axis (A3) of said second outlet shaft (20) based on a second gear ratio of the rotary motion; and
a supporting and containing structure (12) which supports said inlet shaft (14), said first outlet shaft (17) and said second outlet shaft (20) and contains said first toothed wheel (15), said second toothed wheel (16), said third toothed wheel (18) and said fourth toothed wheel (21),
and further **characterized in that** the second gear ratio of the rotary motion of the fourth toothed wheel (21) is different from the first gear ratio of the rotary motion of the third toothed wheel (18).

2. Operative device (11) according to claim 1, **characterized in that** said second outlet shaft (20) rotates faster than said first outlet shaft (17), based on said first gear ratio and second gear ratio.

3. Operative device (11) according to any one of preceding claims, **characterized in that** said third rotation axis (A3) of said second outlet shaft (20) is substantially at 90 degrees with respect to said second rotation axis (A2) of said first outlet shaft (17).

4. Operative device (11) according to any one of preceding claims, **characterized in that** said first outlet shaft (17) comprises connection means (19) to allow, in use, the connection with a first tool (U1).

5. Operative device (11) according to any one of preceding claims, **characterized in that** said second outlet shaft (20) comprises connection means (22) to allow, in use, the connection with a second tool (U2).

6. Operative device (11) according to any one of preceding claims, **characterized in that** it comprises:
a third outlet shaft (23) which is rotatable about a fourth rotation axis (A4) being substantially orthogonal to said first rotation axis (A1) of said inlet shaft (14), wherein said third outlet shaft (23) is connectable, in use, with a third tool (U3), and wherein said rotation axis (A4) of said third outlet shaft (23), said third rotation axis (A3) of said second outlet shaft (20) and said second rotation axis (A2) of said first outlet shaft (17) are substantially coplanar; and
a fifth toothed wheel (24), conical, which is coaxially mounted to said third outlet shaft (23) and engaged to said second toothed wheel (16) such that, in use, said second toothed wheel (16) rotating about said first rotation axis (A1) of said inlet shaft (14) causes said fifth toothed wheel (24) to rotate about said rotation axis (A4) of said third outlet shaft (23) based on a third gear ratio of the rotary motion which is equal to said second gear ratio of the rotary motion.

7. Operative device (11) according to claim 6, **characterized in that** said rotation axis (A4) of said third outlet shaft (23) is substantially at 90 degrees with respect to said third rotation axis (A3) of said second outlet shaft (20).

8. Operative device (11) according to any one of preceding claims, **characterized in that** said first gear ratio of the rotary motion is approximately equal to 1:1.

9. Operative device (11) according to any one of preceding claims, **characterized in that** said second gear ratio of the rotary motion is approximately equal to 2:1.

10. Machine tool (1) for machining at least one workpiece (P), said machine tool (1) comprising:
an electrospindle unit (10); and
an operative device (11) according to any one of preceding claims, which is connected with said electrospindle unit (10) such that said electrospindle unit (10) is able to transmit a rotary motion to said operative device (11).

11. Machine tool (1) according to claim 10, **characterized in that** said operative device (11) is rotatable with respect to said electrospindle unit (10).

## Patentansprüche

1. Betätigungsvorrichtung (11) für eine Werkzeugmaschine (1), die zum Bearbeiten mindestens eines Werkstücks (P) geeignet und mit einer Elektrospindeleinheit (10) versehen ist, wobei die genannte Betätigungsvorrichtung (11) umfasst:
eine Eingangswelle (14), die um eine erste Drehachse (A1) drehbar und im Betrieb mit der genannten Elektrospindeleinheit (10) verbindbar ist, derart, dass die genannte Eingangswelle (14) im Betrieb durch die genannte Elektrospindeleinheit (10) um die genannte erste Drehachse (A1) gedreht wird;
ein erstes Zahnrad (15), das kegelförmig ist, und ein zweites Zahnrad (16), das kegelförmig ist, die koaxial mit der genannten Eingangswelle (14) gekoppelt sind;
eine erste Abtriebswelle (17), die um eine zweite Drehachse (A2) drehbar ist, die im Wesentlichen orthogonal zu der genannten ersten Drehachse (A1) der genannten Eingangswelle (14) ist, wobei die genannte erste Abtriebswelle (17) im Betrieb mit einem ersten Werkzeug (U1) verbindbar ist;
ein drittes Zahnrad (18), kegelförmig, das koaxial mit der genannten ersten Abtriebswelle (17) gekoppelt und mit dem genannten ersten Zahnrad (15) in Eingriff ist, derart, dass im Betrieb das genannte erste Zahnrad (15), das sich um die genannte erste Drehachse (A1) der genannten Eingangswelle (14) dreht, bewirkt, dass sich das genannte dritte Zahnrad (18) um die genannte zweite Drehachse (A2) der genannten ersten Abtriebswelle (17) auf Grundlage eines ersten Übersetzungsverhältnisses der Drehbewegung dreht;
eine zweite Abtriebswelle (20), die um eine dritte Drehachse (A3) drehbar ist, die im Wesentlichen orthogonal zu der genannten ersten Drehachse (A1) der genannten Eingangswelle (14) ist, wobei die genannte zweite Abtriebswelle (20) im Betrieb mit einem zweiten Werkzeug (U2) verbindbar ist, und wobei die genannte dritte Drehachse (A3) der genannten zweiten Abtriebswelle (20) und die genannte zweite Drehachse (A2) der genannten ersten Abtriebswelle (17) im Wesentlichen koplanar sind;
ein viertes Zahnrad (21), kegelförmig, das koaxial an der genannten zweiten Abtriebswelle (20) montiert und mit dem genannten zweiten Zahnrad (16) in Eingriff ist, derart, dass im Betrieb das genannte zweite Zahnrad (16), das sich um die genannte erste Drehachse (A1) der genannten Eingangswelle (14) dreht, bewirkt, dass sich das genannte vierte Zahnrad (21) um die genannte dritte Drehachse (A3) der genannten zweiten Abtriebswelle (20) auf Grundlage eines zweiten Übersetzungsverhältnisses der Drehbewegung dreht; und
eine Trag- und Aufnahmestruktur (12), die die genannte Eingangswelle (14), die genannte erste Abtriebswelle (17) und die genannte zweite Abtriebswelle (20) trägt und das genannte erste Zahnrad (15), das genannte zweite Zahnrad (16), das genannte dritte Zahnrad (18) und das genannte vierte Zahnrad (21) aufnimmt,
und ferner **dadurch gekennzeichnet, dass** das zweite Übersetzungsverhältnis der Drehbewegung des vierten Zahnrads (21) von dem ersten Übersetzungsverhältnis der Drehbewegung des dritten Zahnrads (18) verschieden ist.

2. Betätigungsvorrichtung (11) nach Anspruch 1, **dadurch gekennzeichnet, dass** sich die genannte zweite Abtriebswelle (20) auf Grundlage des genannten ersten Übersetzungsverhältnisses und des zweiten Übersetzungsverhältnisses schneller dreht als die genannte erste Abtriebswelle (17).

3. Betätigungsvorrichtung (11) nach einem der vorhergehenden Ansprüche, **dadurch gekennzeichnet, dass** die genannte dritte Drehachse (A3) der genannten zweiten Abtriebswelle (20) im Wesentlichen in einem Winkel von 90 Grad in Bezug auf die genannte zweite Drehachse (A2) der genannten ersten Abtriebswelle (17) steht.

4. Betätigungsvorrichtung (11) nach einem der vorhergehenden Ansprüche, **dadurch gekennzeichnet, dass** die genannte erste Abtriebswelle (17) Verbindungsmittel (19) umfasst, um im Betrieb die Verbindung mit einem ersten Werkzeug (U1) zu ermöglichen.

5. Betätigungsvorrichtung (11) nach einem der vorhergehenden Ansprüche, **dadurch gekennzeichnet, dass** die genannte zweite Abtriebswelle (20) Verbindungsmittel (22) umfasst, um im Betrieb die Verbindung mit einem zweiten Werkzeug (U2) zu ermöglichen.

6. Betätigungsvorrichtung (11) nach einem der vorhergehenden Ansprüche, **dadurch gekennzeichnet, dass** sie umfasst:
eine dritte Abtriebswelle (23), die um eine vierte Drehachse (A4) drehbar ist, die im Wesentlichen orthogonal zu der genannten ersten Drehachse (A1) der genannten Eingangswelle (14) ist, wobei die genannte dritte Abtriebswelle (23) im Betrieb mit einem dritten Werkzeug (U3) verbindbar ist, und wobei die genannte Drehachse (A4) der genannten dritten Abtriebswelle (23), die genannte dritte Drehachse (A3) der genannten zweiten Abtriebswelle (20) und die genannte zweite Drehachse (A2) der genannten ersten Abtriebswelle (17) im Wesentlichen koplanar sind; und
ein fünftes Zahnrad (24), kegelförmig, das koaxial an der genannten dritten Abtriebswelle (23) montiert und mit dem genannten zweiten Zahnrad (16) in Eingriff ist, derart, dass im Betrieb das genannte zweite Zahnrad (16), das sich um die genannte erste Drehachse (A1) der genannten Eingangswelle (14) dreht, bewirkt, dass sich das genannte fünfte Zahnrad (24) um die genannte Drehachse (A4) der genannten dritten Abtriebswelle (23) auf Grundlage eines dritten Übersetzungsverhältnisses der Drehbewegung dreht, das gleich dem genannten zweiten Übersetzungsverhältnis der Drehbewegung ist.

7. Betätigungsvorrichtung (11) nach Anspruch 6, **dadurch gekennzeichnet, dass** die genannte Drehachse (A4) der genannten dritten Abtriebswelle (23) im Wesentlichen in einem Winkel von 90 Grad in Bezug auf die genannte dritte Drehachse (A3) der genannten zweiten Abtriebswelle (20) steht.

8. Betätigungsvorrichtung (11) nach einem der vorhergehenden Ansprüche, **dadurch gekennzeichnet, dass** das genannte erste Übersetzungsverhältnis der Drehbewegung näherungsweise gleich 1:1 ist.

9. Betätigungsvorrichtung (11) nach einem der vorhergehenden Ansprüche, **dadurch gekennzeichnet, dass** das genannte zweite Übersetzungsverhältnis der Drehbewegung näherungsweise gleich 2:1 ist.

10. Werkzeugmaschine (1) zum Bearbeiten mindestens eines Werkstücks (P), wobei die genannte Werkzeugmaschine (1) umfasst:
eine Elektrospindeleinheit (10); und
eine Betätigungsvorrichtung (11) nach einem der vorhergehenden Ansprüche, die mit der genannten Elektrospindeleinheit (10) verbunden ist, derart, dass die genannte Elektrospindeleinheit (10) in der Lage ist, eine Drehbewegung auf die genannte Betätigungsvorrichtung (11) zu übertragen.

11. Werkzeugmaschine (1) nach Anspruch 10, **dadurch gekennzeichnet, dass** die genannte Betätigungsvorrichtung (11) in Bezug auf die genannte Elektrospindeleinheit (10) drehbar ist.

## Revendications

1. Dispositif d'usinage (11) pour une machine-outil (1), ladite machine-outil étant adaptée pour usiner au moins une pièce (P) et étant pourvue d'une unité d'électrobroche (10), ledit dispositif d'usinage (11) comprenant:
un arbre d'entrée (14) pouvant tourner autour d'un premier axe de rotation (A1) et pouvant être raccordé, en cours d'utilisation, à ladite unité d'électrobroche (10), de sorte que ledit arbre d'entrée (14) est entraîné en rotation, en cours d'utilisation, par ladite unité d'électrobroche (10) autour dudit premier axe de rotation (A1);
une première roue dentée (15) de forme conique et une deuxième roue dentée (16) de forme conique, accouplées coaxialement audit arbre d'entrée (14);
un premier arbre de sortie (17) pouvant tourner autour d'un deuxième axe de rotation (A2) sensiblement orthogonal audit premier axe de rotation (A1) dudit arbre d'entrée (14), ledit premier arbre de sortie (17) pouvant être raccordé, en cours d'utilisation, à un premier outil (U1);
une troisième roue dentée (18) de forme conique, accouplée coaxialement audit premier arbre de sortie (17) et en prise avec ladite première roue dentée (15), de sorte que, en cours d'utilisation, la rotation de ladite première roue dentée (15) autour dudit premier axe de rotation (A1) dudit arbre d'entrée (14) entraîne la rotation de ladite troisième roue dentée (18) autour dudit deuxième axe de rotation (A2) dudit premier arbre de sortie (17), selon un premier rapport de transmission du mouvement de rotation;
un deuxième arbre de sortie (20) pouvant tourner autour d'un troisième axe de rotation (A3) sensiblement orthogonal audit premier axe de rotation (A1) dudit arbre d'entrée (14), ledit deuxième arbre de sortie (20) pouvant être raccordé, en cours d'utilisation, à un deuxième outil (U2), ledit troisième axe de rotation (A3) dudit deuxième arbre de sortie (20) et ledit deuxième axe de rotation (A2) dudit premier arbre de sortie (17) étant sensiblement coplanaires;
une quatrième roue dentée (21) de forme conique, montée coaxialement sur ledit deuxième arbre de sortie (20) et en prise avec ladite deuxième roue dentée (16), de sorte que, en cours d'utilisation, la rotation de ladite deuxième roue dentée (16) autour dudit premier axe de rotation (A1) dudit arbre d'entrée (14) entraîne la rotation de ladite quatrième roue dentée (21) autour dudit troisième axe de rotation (A3) dudit deuxième arbre de sortie (20), selon un deuxième rapport de transmission du mouvement de rotation; et
une structure de support et de logement (12) qui supporte ledit arbre d'entrée (14), ledit premier arbre de sortie (17) et ledit deuxième arbre de sortie (20), et qui loge ladite première roue dentée (15), ladite deuxième roue dentée (16), ladite troisième roue dentée (18) et ladite quatrième roue dentée (21), et **caractérisé en outre en ce que** le deuxième rapport de transmission du mouvement de rotation de la quatrième roue dentée (21) est différent du premier rapport de transmission du mouvement de rotation de la troisième roue dentée (18).

2. Dispositif d'usinage (11) selon la revendication 1, **caractérisé en ce que** ledit deuxième arbre de sortie (20) tourne plus rapidement que ledit premier arbre de sortie (17), en fonction desdits premier et deuxième rapports de transmission.

3. Dispositif d'usinage (11) selon l'une quelconque des revendications précédentes, **caractérisé en ce que** ledit troisième axe de rotation (A3) dudit deuxième arbre de sortie (20) forme sensiblement un angle de 90 degrés avec ledit deuxième axe de rotation (A2) dudit premier arbre de sortie (17).

4. Dispositif d'usinage (11) selon l'une quelconque des revendications précédentes, **caractérisé en ce que** ledit premier arbre de sortie (17) comprend des moyens de raccordement (19) permettant son raccordement, en cours d'utilisation, à un premier outil (U1).

5. Dispositif d'usinage (11) selon l'une quelconque des revendications précédentes, **caractérisé en ce que** ledit deuxième arbre de sortie (20) comprend des moyens de raccordement (22) permettant son raccordement, en cours d'utilisation, à un deuxième outil (U2).

6. Dispositif d'usinage (11) selon l'une quelconque des revendications précédentes, **caractérisé en ce qu'**il comprend:
un troisième arbre de sortie (23) pouvant tourner autour d'un quatrième axe de rotation (A4) sensiblement orthogonal audit premier axe de rotation (A1) dudit arbre d'entrée (14), ledit troisième arbre de sortie (23) pouvant être raccordé, en cours d'utilisation, à un troisième outil (U3), ledit quatrième axe de rotation (A4) dudit troisième arbre de sortie (23), ledit troisième axe de rotation (A3) dudit deuxième arbre de sortie (20) et ledit deuxième axe de rotation (A2) dudit premier arbre de sortie (17) étant sensiblement coplanaires; et
une cinquième roue dentée (24) de forme conique, montée coaxialement sur ledit troisième arbre de sortie (23) et en prise avec ladite deuxième roue dentée (16), de sorte que, en cours d'utilisation, la rotation de ladite deuxième roue dentée (16) autour dudit premier axe de rotation (A1) dudit arbre d'entrée (14) entraîne la rotation de ladite cinquième roue dentée (24) autour dudit quatrième axe de rotation (A4) dudit troisième arbre de sortie (23), selon un troisième rapport de transmission du mouvement de rotation égal audit deuxième rapport de transmission du mouvement de rotation.

7. Dispositif d'usinage (11) selon la revendication 6, **caractérisé en ce que** ledit quatrième axe de rotation (A4) dudit troisième arbre de sortie (23) forme sensiblement un angle de 90 degrés avec ledit troisième axe de rotation (A3) dudit deuxième arbre de sortie (20).

8. Dispositif d'usinage (11) selon l'une quelconque des revendications précédentes, **caractérisé en ce que** ledit premier rapport de transmission du mouvement de rotation est approximativement égal à 1:1.

9. Dispositif d'usinage (11) selon l'une quelconque des revendications précédentes, **caractérisé en ce que** ledit deuxième rapport de transmission du mouvement de rotation est approximativement égal à 2:1.

10. Machine-outil (1) destinée à usiner au moins une pièce (P), ladite machine-outil (1) comprenant:
une unité d'électrobroche (10); et
un dispositif d'usinage (11) selon l'une quelconque des revendications précédentes, raccordé à ladite unité d'électrobroche (10), de sorte que ladite unité d'électrobroche (10) est apte à transmettre un mouvement de rotation audit dispositif d'usinage (11).

11. Machine-outil (1) selon la revendication 10, **caractérisée en ce que** ledit dispositif d'usinage (11) peut tourner par rapport à ladite unité d'électrobroche (10).
